# EUROPEAN PATENT APPLICATION

(11) **EP 4 750 205 A1**
(43) Date of publication of application: **27.05.2026**
(21) Application number: 24850839.2
(22) Date of filing: 29.07.2024
(51) Int. Cl.: H04W 72/542

(54) **COMMUNICATION METHOD AND APPARATUS**

(30) Priority: 09.08.2023 CN 202311009747
(71) Applicant: HUAWEI TECHNOLOGIES CO., LTD., Shenzhen 518129 (CN)
(72) Inventor: YANG, Zhihui, Shenzhen, Guangdong 518129 (CN); SHA, Tong, Shenzhen, Guangdong 518129 (CN)
(74) Representative: Maiwald GmbH
(86) International application number: PCT/CN2024/108158
(87) International publication number: WO 2025/031191

(57) **Abstract**

A communication method and apparatus are provided. The method includes: A terminal device sends a first message, where the first message indicates at least one capability set, and one of the at least one capability set includes a capability corresponding to at least one user of the terminal device; and the terminal device sends a second message, where the second message indicates a first value and a first capability set, the first value is a value of a first capability parameter, the first capability parameter is a capability parameter in the first capability set, a value of the first capability parameter in the first capability set is a second value, and the first capability set is one of the at least one capability set. Therefore, a communication exception is avoided.

## Description

### CROSS-REFERENCE TO RELATED APPLICATIONS

This application claims priority to Chinese Patent Application No. 202311009747.9, filed with the China National Intellectual Property Administration on August 9, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Generally, two or more subscriber identity module (subscriber identity module, SIM) cards may be disposed inside a terminal device, and each SIM card may correspond to one user. A terminal device with dual SIM (dual SIM) cards is used as an example. The terminal device may respectively report, to network devices corresponding to the two SIM cards, capability information that is of the terminal device and that corresponds to the two SIM cards. Then, a network device may allocate a corresponding resource to each SIM card based on capability information of each SIM card. Therefore, users corresponding to the two SIM cards may respectively execute services based on resources allocated by the network devices.

However, capability information corresponding to one SIM card when only a single card of the terminal device operates may change compared with capability information corresponding to one SIM card when dual cards of the terminal device both operate. Therefore, UE needs to dynamically update the capability information to the network device corresponding to each SIM card, to ensure that configuration and scheduling performed by the network device do not exceed a capability of the terminal device, and avoid a communication exception.

### SUMMARY

Embodiments of this application provide a communication method and apparatus, to avoid a communication exception.

According to a first aspect, an embodiment of this application provides a communication method. The method may be performed by a terminal device or a chip in a terminal device. For example, the method is performed by the terminal device. The method includes: The terminal device may send a first message, where the first message indicates at least one capability set, and one of the at least one capability set includes a capability corresponding to at least one user of the terminal device; and the terminal device may send a second message, where the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

In the foregoing solution, the terminal device may report at least one capability set when reporting a capability. Subsequently, the terminal device may indicate, based on a current capability, a network device to modify any one of the at least one capability set, to obtain a new capability set, so that the network device can configure a resource for the terminal device based on the new capability set. Because the new capability set meets the current capability of the terminal device, the network device can schedule the terminal device based on the current actual capability of the terminal device. In this case, the terminal device is capable of being scheduled by the network device. Therefore, when a plurality of SIM cards all operate, the terminal device can also perform communication based on the scheduling performed by the network device, thereby avoiding a communication exception and helping improve overall performance of the terminal device having the plurality of SIM cards.

In a possible implementation, the terminal device may further send a third message, where the third message indicates a second capability set, and the second capability set is one of the at least one capability set.

The terminal device may indicate, based on the current capability, the network device to configure a resource for the terminal device based on one of the at least one capability set that is previously reported, and the network device does not need to modify the previously reported capability set, thereby reducing processing complexity of the network device.

In a possible implementation, a capability set having a first index in the at least one capability set is a default capability set, and the default capability set is used by a network device to configure a resource for the terminal device when the network device does not receive a message that indicates a capability parameter and/or a capability set.

The terminal device may preconfigure the default capability set in the at least one capability set, so that the network device can configure a resource for the terminal device based on the default capability set in the at least one capability set when the network device does not receive an indication of the terminal device. Because the terminal device does not indicate, based on the current capability, the network device to modify or switch the at least one reported capability set, it indicates that the default capability set meets the current capability of the terminal device. In other words, when the terminal device does not indicate the network device, the network device may also schedule the terminal device based on the current actual capability of the terminal device, which can not only enable scheduling performed by the network device to meet the actual capability of the terminal device and avoid a communication exception, but also reduce signaling overheads.

In a possible implementation, the first message further indicates a second index, and a capability set having the second index in the at least one capability set is used by a network device to configure a resource for the terminal device.

When reporting the at least one capability set, the terminal device may synchronously indicate an index of one of the at least one capability set, so that the network device can configure a resource for the terminal device based on the capability set having the index. Because the terminal device does not need to additionally send a message to indicate the index to the network device, signaling overheads can be reduced.

According to a second aspect, an embodiment of this application provides a communication method. The method may be performed by a network device or a chip in a network device. For example, the method is performed by the network device. The method includes: The network device may receive a first message, where the first message indicates at least one capability set, and one of the at least one capability set includes a capability corresponding to at least one user of a terminal device; and the network device may receive a second message, where the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

In a possible implementation, the network device may further modify the first capability parameter in the first capability set based on the first value, to obtain a third capability set.

In a possible implementation, the network device may further configure a resource for the terminal device based on the third capability set.

In a possible implementation, the network device may further receive a third message, where the third message indicates a second capability set, and the second capability set is one of the at least one capability set; and the network device may further configure a resource for the terminal device based on the second capability set.

In a possible implementation, after the network device receives the first message, when the network device does not receive a message that indicates a capability parameter and/or a capability set, the network device may further determine that a capability set having a first index in the at least one capability set is a default capability set, and configure a resource for the terminal device based on the default capability set.

In a possible implementation, after the network device receives the first message, when the first message further indicates a second index, the network device may further configure a resource for the terminal device based on a capability set having the second index in the at least one capability set.

For beneficial effects of the second aspect, refer to beneficial effects of the first aspect. Details are not described again.

According to a third aspect, an embodiment of this application provides a communication method. The method may be performed by a terminal device or a chip in a terminal device. For example, the method is performed by the terminal device. The method includes: The terminal device may receive a fourth message, where the fourth message indicates a measurement objective, and the measurement objective includes configuration of a secondary cell group SCG and/or a secondary carrier component SCC for the terminal device; and the terminal device may send a fifth message when the terminal device does not support the configuration of the SCG and/or the SCC, where the fifth message indicates that the terminal device does not support the configuration of the SCG and/or the SCC.

In the foregoing solution, when the network device needs to configure the SCG and/or the SCC for the terminal device based on a measurement report, if the terminal device does not support the configuration of the SCG and/or the SCC, the terminal device may notify the network device that the terminal device does not support the configuration of the SCG and/or the SCC. In this way, the network device may determine that a reason why the terminal device does not report the measurement report is that the terminal device does not support the configuration of the SCG and/or the SCC, and therefore, the network device does not configure the SCG and/or SCC for the terminal device, thereby avoiding a case in which the SCG and/or the SCC configured by the network device for the terminal device exceed/exceeds a current capability of the terminal device. Further, the network device can schedule the terminal device based on a current actual capability of the terminal device. In this case, the terminal device is capable of being scheduled by the network device. Therefore, when a plurality of SIM cards all operate, the terminal device can also perform communication based on the scheduling performed by the network device, thereby avoiding a communication exception and helping improve overall performance of the terminal device having the plurality of SIM cards.

In a possible implementation, the measurement objective is related to a first frequency, and the first frequency is a frequency used to configure the SCG and/or the SCC; or the measurement objective is related to a first measurement object, the first measurement object is a measurement object at a first frequency, and the first frequency is a frequency used to configure the SCG and/or the SCC; or the measurement objective is related to a first reference signal, the first reference signal is a reference signal transmitted at a first frequency, and the first frequency is a frequency used to configure the SCG and/or the SCC; or the measurement objective is related to a first measurement reporting configuration, and the first measurement reporting configuration is used to configure measurement reporting of the SCG and/or the SCC.

When indicating the measurement objective, the network device may associate the measurement objective with other measurement configuration information such as the first frequency, the first measurement object, the first reference signal, or the first measurement report, so that the terminal device can quickly obtain the measurement objective from the other measurement configuration information related to the measurement objective, thereby reducing processing complexity of the terminal device.

In a possible implementation, that the terminal device does not support the configuration of the SCG and/or the SCC includes: The terminal device does not support the configuration of the SCG and/or the SCC at the first frequency.

In a possible implementation, when the terminal device does not support the configuration of the SCG and/or the SCC, the terminal device may further perform one or more of the following operations: discarding the fourth message; skipping measuring the first frequency, where the first frequency is a frequency used to configure the SCG and/or the SCC; or skipping sending a measurement report about the first frequency, where the first frequency is a frequency used to configure the SCG and/or the SCC.

When the terminal device does not support the configuration of the SCG and/or the SCC, the terminal device may indicate, in a manner such as discarding a message that indicates a measurement objective, skipping performing measurement, or skipping reporting a measurement report, the network device not to configure the SCG and/or the SCC for the terminal device. This avoids a case in which the SCG and/or the SCC configured by the network device for the terminal device exceed/exceeds a current capability of the terminal device. Because the terminal device does not need to additionally report a current capability specification of the terminal device, signaling exchange and signaling overheads can be reduced.

In a possible implementation, before the terminal device receives the fourth message, the terminal device may further send a sixth message, where the sixth message indicates that a capability of the terminal device is in a restricted state.

When reporting the capability, the terminal device may report that the capability of the terminal device is in the restricted state, so that the network device needs to configure the SCG and/or the SCC for the terminal device based on the measurement report. This can reduce a probability that the network device blindly configures the SCG and/or the SCC for the terminal device without considering the current capability specification of the terminal device.

In a possible implementation, the sixth message indicates, by including one or more of the following information, that the capability of the terminal device is in the restricted state: first indication information, indicating to reduce a maximum number of cells supported by the terminal device for carrier aggregation and/or reduce a maximum number of multiple-input multiple-output MIMO layers supported by the terminal device; second indication information, indicating restricted capability information of the terminal device; or third indication information, indicating that the capability of the terminal device is in the restricted state.

Based on the foregoing information, the network device can quickly learn that the capability of the terminal device is in the restricted state, and the network device needs to configure the SCG and/or the SCC for the terminal device based on the measurement report. This can reduce the probability that the network device blindly configures the SCG and/or the SCC for the terminal device without considering the current capability specification of the terminal device.

According to a fourth aspect, an embodiment of this application provides a communication method. The method may be performed by a network device or a chip in a network device. For example, the method is performed by a terminal device. The method includes: The network device may send a fourth message, where the fourth message indicates a measurement objective, and the measurement objective includes configuration of an SCG and/or an SCC for a terminal device; and the network device may receive a fifth message, where the fifth message indicates that the terminal device does not support the configuration of the SCG and/or the SCC.

In a possible implementation, the measurement objective is related to a first frequency, and the first frequency is a frequency used to configure the SCG and/or the SCC; or the measurement objective is related to a first measurement object, the first measurement object is a measurement object at a first frequency, and the first frequency is a frequency used to configure the SCG and/or the SCC; or the measurement objective is related to a first reference signal, the first reference signal is a reference signal transmitted at a first frequency, and the first frequency is a frequency used to configure the SCG and/or the SCC; or the measurement objective is related to a first measurement reporting configuration, and the first measurement reporting configuration is used to configure measurement reporting of the SCG and/or the SCC.

In a possible implementation, that the terminal device does not support the configuration of the SCG and/or the SCC includes: The terminal device does not support the configuration of the SCG and/or the SCC at the first frequency.

In a possible implementation, before the network device sends the fourth message, the network device may further receive a sixth message, where the sixth message indicates that a capability of the terminal device is in a restricted state.

In a possible implementation, the sixth message indicates, by including one or more of the following information, that the capability of the terminal device is in the restricted state: first indication information, indicating to reduce a maximum number of cells supported by the terminal device for carrier aggregation and/or reduce a maximum number of multiple-input multiple-output MIMO layers supported by the terminal device; second indication information, indicating restricted capability information of the terminal device; or third indication information, indicating that the capability of the terminal device is in the restricted state.

For beneficial effects of the fourth aspect, refer to beneficial effects of the third aspect. Details are not described again.

According to a fifth aspect, an embodiment of this application provides a communication method. The method may be performed by a terminal device or a chip in a terminal device. For example, the method is performed by the terminal device. The method includes: The terminal device may send a seventh message, where the seventh message indicates that the terminal device supports dual connectivity DC; the terminal device may receive a first SCG configuration message, where the first SCG configuration message is used to configure a first SCG for the terminal device; and the terminal device may send an SCG failure message, where the SCG failure message indicates that the terminal device fails to configure the first SCG, the SCG failure message includes a failure cause value, and the failure cause value indicates that a reason why the terminal device fails to configure the first SCG includes that at least two subscriber identity module SIM cards of the terminal device all operate.

In the foregoing solution, when reporting a capability, the terminal device may report that the terminal device supports the DC, so that the network device configures the SCG for the terminal device. Subsequently, the terminal device may add the failure cause value to the SCG failure message, to notify the network device that a reason why the terminal device fails to configure the SCG includes multi-card concurrency of the terminal device, so that the network device no longer configures the SCG for the terminal device, thereby avoiding a case in which the SCG configured by the network device for the terminal device exceeds a current capability of the terminal device. Further, the network device can schedule the terminal device based on the current actual capability of the terminal device. In this case, the terminal device is capable of being scheduled by the network device. Therefore, when a plurality of SIM cards all operate, the terminal device can also perform communication based on the scheduling performed by the network device, which helps improve overall performance of the terminal device having the plurality of SIM cards. In addition, because the SCG failure message is an existing message, the SCG failure message is indicated by adding the failure cause value, and no additional air interface message needs to be introduced for notification, so that signaling exchange and signaling overheads can be reduced.

In a possible implementation, the terminal device may further send an eighth message when the at least two SIM cards of the terminal device all stop operating, where the eighth message indicates that the terminal device supports the DC; and the terminal device may further receive a second SCG configuration message, where the second SCG configuration message is used to configure a second SCG for the terminal device.

When the at least two SIM cards of the terminal device all stop operating, the terminal device may notify the network device that the terminal device supports the DC, so that the network device can reconfigure an SCG for the terminal device, thereby meeting a requirement of a system on a high communication rate.

According to a sixth aspect, an embodiment of this application provides a communication method. The method may be performed by a network device or a chip in a network device. For example, the method is performed by a terminal device. The method includes: The network device may receive a seventh message, where the seventh message indicates that a terminal device supports dual connectivity DC; the network device may send a first SCG configuration message, where the first SCG configuration message is used to configure a first SCG for the terminal device; and the network device may receive an SCG failure message, where the SCG failure message indicates that the terminal device fails to configure the first SCG, the SCG failure message includes a failure cause value, and the failure cause value indicates that a reason why the terminal device fails to configure the first SCG includes that at least two SIM cards of the terminal device all operate.

In a possible implementation, the network device may further receive an eighth message, where the eighth message indicates that the terminal device supports the DC; and the network device may further send a second SCG configuration message, where the second SCG configuration message is used to configure a second SCG for the terminal device.

For beneficial effects of the sixth aspect, refer to beneficial effects of the fifth aspect. Details are not described again.

According to a seventh aspect, an embodiment of this application provides a communication apparatus, including a processor and a storage. The storage is configured to store computer instructions. When the apparatus runs, the processor executes the computer instructions stored in the storage, to enable the apparatus to perform any one of the implementation methods in the first aspect to the sixth aspect. The storage may be a volatile or non-volatile memory, for example, a cache in a semiconductor chip.

According to an eighth aspect, an embodiment of this application provides a communication apparatus. The apparatus may be a terminal device or a network device, or may be a chip used in a terminal device or a network device. The apparatus has a function of implementing any one of the implementation methods in the first aspect to the sixth aspect. The function may be implemented by hardware, or may be implemented by hardware executing corresponding software. The hardware or the software includes one or more modules corresponding to the function.

According to a ninth aspect, an embodiment of this application provides a communication apparatus, including units or means (means) for performing steps of any one of the implementation methods in the first aspect to the sixth aspect.

According to a tenth aspect, an embodiment of this application provides a communication apparatus, including a processor and an interface circuit. The processor is configured to: communicate with another apparatus through the interface circuit, and perform any one of the implementation methods in the first aspect to the sixth aspect. There may be one or more processors.

According to an eleventh aspect, an embodiment of this application provides a communication apparatus, including a processor coupled to a storage. The processor is configured to invoke a program stored in the storage, to perform any one of the implementation methods in the first aspect to the sixth aspect. The storage may be located inside or outside the apparatus. There may be one or more processors.

According to a twelfth aspect, an embodiment of this application further provides a computer-readable storage medium. The computer-readable storage medium stores instructions, and when the instructions are run on a communication apparatus, any one of the implementation methods in the first aspect to the sixth aspect is performed.

According to a thirteenth aspect, an embodiment of this application further provides a computer program product. The computer program product includes a computer program or instructions, and when the computer program or the instructions are run on a communication apparatus, any one of the implementation methods in the first aspect to the sixth aspect is performed.

According to a fourteenth aspect, an embodiment of this application further provides a chip system, including a processor, configured to perform any one of the implementation methods in the first aspect to the sixth aspect.

### BRIEF DESCRIPTION OF DRAWINGS

FIG. 1 is a diagram of a structure of a wireless communication system according to an embodiment of this application;
FIG. 2 is a diagram of a structure of a wireless communication device according to an embodiment of this application;
FIG. 3 is a diagram of an existing UE communication procedure;
FIG. 4 is a diagram of an RRC status transition procedure;
FIG. 5 is a diagram of a UE communication procedure according to an embodiment of this application;
FIG. 6 is a diagram of another UE communication procedure according to an embodiment of this application;
FIG. 7 is a diagram of still another UE communication procedure according to an embodiment of this application;
FIG. 8 is a diagram of a communication apparatus; and
FIG. 9 is a diagram of a communication apparatus.

### DESCRIPTION OF EMBODIMENTS

In embodiments of this application, the terms "system" and "network" may be used interchangeably. "A plurality of" means two or more. In view of this, "a plurality of" may also be understood as "at least two" in embodiments of this application. "At least one" may be understood as one or more, for example, one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. The term "and/or" describes an association relationship between associated objects and indicates that three relationships may exist. For example, A and/or B may represent the following three cases: Only A exists, both A and B exist, and only B exists. In addition, the character "/", unless otherwise specified, generally indicates an "or" relationship between the associated objects.

Unless otherwise specified, ordinal numbers such as "first" and "second" mentioned in embodiments of this application are used to distinguish between a plurality of objects, and are not used to limit a sequence, a time sequence, priorities, or importance of the plurality of objects. In addition, descriptions such as "first" and "second" do not mean that objects are necessarily different.

Technical solutions in embodiments of this application are mainly applicable to a wireless communication system. The wireless communication system may comply with the wireless communication standards of the 3rd generation partnership project (third generation partnership project, 3GPP), or may comply with other wireless communication standards, for example, wireless communication standards of the 802 series (for example, 802.11, 802.15, or 802.20) of the institute of electrical and electronics engineers (Institute of Electrical and Electronics Engineers, IEEE).

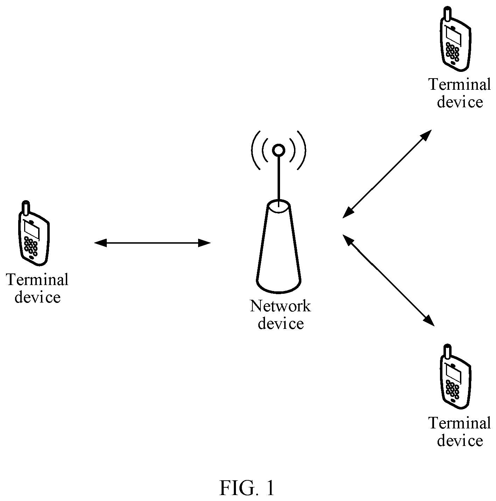

FIG. 1 is a diagram of a structure of a wireless communication system according to an embodiment of this application. The wireless communication system includes a network device and one or more terminal devices. Based on transmission directions, a transmission link from the terminal device to the network device is denoted as an uplink (uplink, UL), and a transmission link from the network device to the terminal device is denoted as a downlink (downlink, DL). Data transmission on the uplink may be referred to as uplink data transmission or uplink transmission, and data transmission on the downlink may be referred to as downlink data transmission or downlink transmission.

In the wireless communication system, the network device may provide communication coverage for a specific geographic region via an integrated or external antenna device. One or more terminal devices located within a communication coverage range of the network device may all access the network device. One network device may manage one or more cells (cell). Each cell has one identification (identification). The identification is also referred to as a cell identity (cell identity, cell ID). From a perspective of radio resources, a cell is a combination of downlink radio resources, and uplink radio resources (optional) that are paired with the downlink radio resources.

The terminal device and the network device learn of configurations predefined by the wireless communication system, including a radio access technology (radio access technology, RAT) supported by the system, a radio resource configuration (for example, a basic configuration of a radio frequency band and a carrier) specified by the system, and the like. A carrier is a frequency range that complies with a specification of the system. The frequency range may be determined jointly based on a center frequency of the carrier (denoted as a carrier frequency) and a bandwidth of the carrier. The configurations predefined by the system may be used as a part of a standard protocol for the wireless communication system, or may be determined through interaction between the terminal device and the network device. Content of a related standard protocol may be pre-stored in memories of the terminal device and the network device, or may be embodied as hardware circuits or software code of the terminal device and the network device.

In the wireless communication system, the terminal device and the network device support one or more same RATs, for example, new radio (New radio, NR), long term evolution (long term evolution, LTE), or a RAT of a future evolved system. Specifically, the terminal device and the network device use a same air interface parameter, coding scheme, modulation scheme, and the like, and communicate with each other based on a radio resource specified by the system.

The terminal device in embodiments of this application is a device having a wireless transceiver function, and may be deployed on land, including an indoor device or an outdoor device, a handheld device or a vehicle-mounted device, may be deployed on water (for example, on a ship), or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like. In embodiments of this application, an example in which the UE is used as the terminal device is used for description.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like. The network device may alternatively be a module or a unit that completes some functions of a base station, for example, may be a central unit (central unit, CU), or may be a distributed unit (distributed unit, DU). The network device may be a macro base station (for example, 110a in FIG. 1), may be a micro base station or an indoor site (for example, 110b in FIG. 1), or may be a relay node, a donor node, or the like. A specific technology and a specific device form that are used by the network device are not limited in embodiments of this application. In embodiments of this application, an example in which the base station is used as the network device is used for description.

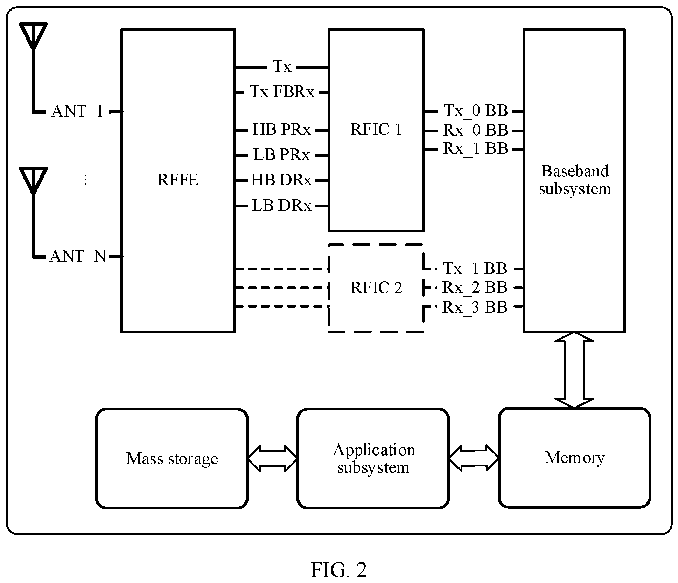

FIG. 2 is a diagram of a structure of a wireless communication device according to an embodiment of this application. The wireless communication device may be the UE or the base station in embodiments of this application. The wireless communication device may include a plurality of components, for example, an application subsystem, a memory (memory), a mass storage (massive storage), a baseband subsystem, a radio frequency integrated circuit (radio frequency integrated circuit, RFIC), a radio frequency front end (radio frequency front end, RFFE) device, and an antenna (antenna, ANT). These components may be coupled through various interconnection buses or other electrical connection manners.

In FIG. 2, ANT_1 represents a first antenna, ANT_N represents an N^{th} antenna, and N is a positive integer greater than 1. Tx represents a transmit path, Rx represents a receive path, and different numbers represent different paths. Each path may represent a signal processing path. FBRx represents a feedback receive path, PRx represents a primary receive path, and DRx represents a diversity receive path. HB represents a high frequency, LB represents a low frequency, and HB and LB represent relative magnitudes of frequencies. BB represents a baseband. It should be understood that marks and components in FIG. 2 are merely used for illustration, and are merely used as a possible implementation. Embodiments of this application further include another implementation. For example, the wireless communication device may include more or fewer paths, including more or fewer components.

The application subsystem may include one or more processors. A plurality of processors may include a plurality of processors of a same type, or may include a combination of processors of a plurality of types. In this application, the processor may be a processor for a general purpose, or may be a processor designed for a specific field. For example, the processor may be a central processing unit (center processing unit, CPU), a digital signal processor (digital signal processor, DSP), or a micro control unit (micro control unit, MCU). Alternatively, the processor may be a graphics processing unit (graphics processing unit, GPU), an image signal processor (image signal processing, ISP), an audio signal processor (audio signal processor, ASP), or an AI processor specially designed for an artificial intelligence (artificial intelligence, AI) application. The AI processor includes but is not limited to a neural network processing unit (neural network processing unit, NPU), a tensor processing unit (tensor processing unit, TPU), and a processor referred to as an AI engine.

The radio frequency integrated circuit (including an RFIC 1 and one or more optional RFICs 2) and the radio frequency front end device may jointly form a radio frequency subsystem. Based on different signal receive or transmit paths, the radio frequency subsystem may also be divided into a radio frequency receive path (RF receive path) and a radio frequency transmit path (RF transmit path). The radio frequency receive path may receive a radio frequency signal via an antenna, perform processing (for example, amplification, filtering, and down-conversion) on the radio frequency signal to obtain a baseband signal, and transfer the baseband signal to the baseband subsystem. The radio frequency transmit path may receive a baseband signal from the baseband subsystem, perform processing (for example, up-conversion, amplification, and filtering) on the baseband signal to obtain a radio frequency signal, and finally radiate the radio frequency signal to space via the antenna. The radio frequency integrated circuit may be referred to as a radio frequency processing chip or a radio frequency chip.

Similar to that the radio frequency subsystem mainly completes radio frequency signal processing, the baseband subsystem mainly completes baseband signal processing. The baseband subsystem may extract wanted information or data bits from the baseband signal, or convert information or data bits into a to-be-sent baseband signal. The information or data bits may be data representing user data or control information such as voice, text, and a video. For example, the baseband subsystem may implement signal processing operations such as modulation and demodulation, and encoding and decoding. For different radio access technologies, for example, 5G NR and 4G LTE, baseband signal processing operations are not completely the same.

The baseband subsystem, similar to the application subsystem, may also include one or more processors. In addition, the baseband subsystem may further include one or more hardware accelerators (hardware accelerator, HAC). The hardware accelerator may be configured to specially complete some sub-functions with high processing overheads, for example, assembling and parsing a data packet (data packet), and encrypting and decrypting a data packet. These sub-functions may also be implemented by using a processor with a general function. However, in consideration of performance or costs, using the hardware accelerator may be more appropriate. In a specific implementation, the hardware accelerator is mainly implemented via an application-specific integrated circuit (application-specified integrated circuit, ASIC). Certainly, the hardware accelerator may also include one or more simple processors, where for example, the processor is an MCU.

The baseband subsystem may be integrated as one or more chips, and the chip may be referred to as a baseband processing chip or a baseband chip. The baseband subsystem may be used as an independent chip, and the chip may be referred to as a modem (modem) or a modem chip. The baseband subsystem may be manufactured and sold in a form of the modem chip. The modem chip is sometimes also referred to as a baseband processor or a mobile processor. In addition, the baseband subsystem may alternatively be further integrated into a larger chip, and is manufactured and sold in a form of the larger chip. The larger chip may be referred to as a system chip, a chip system, or a system-on-a-chip (system-on-a-chip, SoC), or a SoC chip for short. Software components of the baseband subsystem may be built in hardware components of a chip before the chip is delivered, or may be imported from another non-volatile memory to hardware components of a chip after the chip is delivered, or may be downloaded and updated online in a network.

In addition, the wireless communication device may further include a storage, for example, the memory and the mass storage in FIG. 2. In addition, the application subsystem and the baseband subsystem may further each include one or more caches. In a specific implementation, storages may be classified into a volatile memory (volatile memory) and a non-volatile memory (non-volatile memory, NVM). The volatile memory is a storage whose internally stored data is lost when a power supply is interrupted. At present, the volatile memory is mainly a random access memory (random access memory, RAM), including a static random access memory (static RAM, SRAM) and a dynamic random access memory (dynamic RAM, DRAM). The non-volatile memory is a storage whose internally stored data is not lost even if a power supply is interrupted. A common non-volatile memory includes a read-only memory (read-only memory, ROM), an optical disc, a magnetic disk, various storages based on a flash memory (flash memory) technology, and the like. Generally, the volatile memory may be used for the memory and the cache, and the non-volatile memory, for example, a flash memory, may be used for the mass storage.

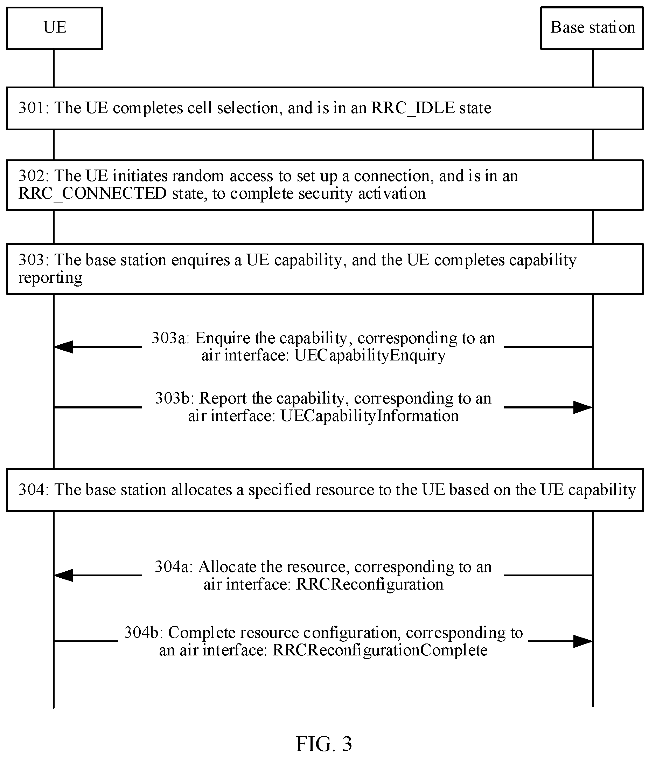

FIG. 3 is a diagram of an existing UE communication procedure, which includes the following steps.

Step 301: UE completes cell selection, and is in a radio resource control (Radio Resource Control, RRC) idle (RRC_IDLE) state.

Step 302: The UE initiates random access to set up a connection, and is in an RRC connected (RRC_CONNECTED) state, to complete security activation.

Step 303: A base station enquires a UE capability, and the UE completes capability reporting.

Step 303 may include the following step 303a and step 303b.

Step 303a: The base station enquires the UE capability, for example, the base station sends an air interface message UECapabilityEnquiry to the UE, to request to enquire the UE capability.

Step 303b: The UE reports the capability to the base station, for example, the UE sends an air interface message UECapabilityInformation to the base station, to report the UE capability.

Step 304: The base station allocates a specified resource to the UE based on the UE capability.

The resource allocated to the UE includes a time domain resource, a frequency domain resource, a configured primary cell, a configured secondary cell, and the like.

Step 304 may include the following step 304a and step 304b.

Step 304a: The base station allocates the resource to the UE, for example, the base station sends an air interface message RRCReconfiguration to the UE, to request to perform RRC reconfiguration on the UE.

Step 304b: The UE indicates, to the base station, that resource configuration is completed, for example, the UE sends an air interface message RRCReconfigurationComplete to the base station, to indicate that RRC reconfiguration is completed.

Based on the foregoing process, a resource can be configured for the UE, so that the UE can implement communication.

After the UE enters the RRC_CONNECTED state, connection suspension may occur and the UE enters an RRC inactive (RRC_INACTIVE) state. The UE may enter the RRC_CONNECTED state again from the RRC_INACTIVE state through connection resume. When connection resume is performed, the base station allocates a network resource through an air interface message RRCResume, and the UE notifies the base station to complete network resource allocation through an air interface message RRCResumeComplete.

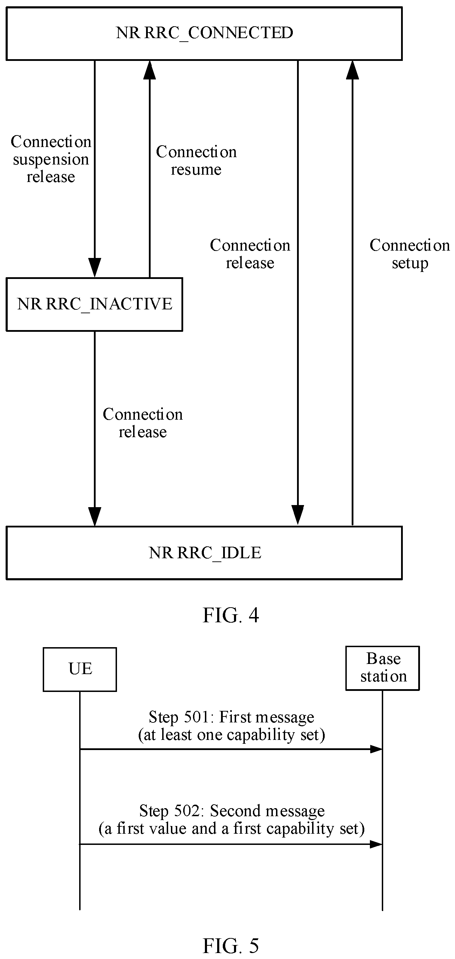

FIG. 4 is a diagram of an RRC status transition procedure. As shown in FIG. 4, the UE may enter the RRC_INACTIVE state from the RRC_CONNECTED state by releasing the connection suspension, and may enter the RRC_CONNECTED state from the RRC_INACTIVE state by performing connection resume. The UE may enter the RRC_IDLE state from the RRC_INACTIVE state by performing connection release. The UE may enter the RRC_IDLE state from the RRC_CONNECTED state by performing connection release, and may enter the RRC_CONNECTED state from the RRC_IDLE state by performing connection resume.

The following describes the UE capability. The UE capability is specific to an entire UE level and indicates a highest capability specification that can be supported by the UE. Currently, two or more subscriber identity module (subscriber identity module, SIM) cards may be inserted into one UE, and the SIM card may be a physical SIM card or a virtual SIM card. Therefore, the UE needs to report a UE capability corresponding to each SIM card. For ease of description, in embodiments of this application, an example in which two SIM cards may be both inserted into one UE is used for description.

The UE capability includes but is not limited to:

### (1) Maximum number of supported cells for carrier aggregation (carrier aggregation, CA)

For example, CA-BandwidthClassNR indicates a maximum number of cells supported by the UE for carrier aggregation, and the maximum number of cells supported by the UE for carrier aggregation may be 1, 2, 3, 4, 5, or 8.

### (2) Maximum number of supported multiple-input multiple-output (Multiple-input multiple-output, MIMO) layers

The maximum number of supported MIMO layers, for example, includes:

### (a) Maximum number of MIMO layers supported on a downlink

For example, maxNumberMIMO-LayersPDSCH indicates the maximum number of MIMO layers supported on the downlink, and may have a value of 2, 4, 8, or the like.

### (b) Maximum number of MIMO layers supported on an uplink in a codebook mode

For example, maxNumberMIMO-LayersCB-PUSCH indicates the maximum number of MIMO layers supported on the uplink in the codebook mode, and may have a value of 1, 2, or 4.

### (c) Maximum number of MIMO layers supported on the uplink in a non-codebook mode

For example, maxNumberMIMO-LayersNonCB-PUSCH indicates the maximum number of MIMO layers supported on the uplink in the non-codebook mode, and may have a value of 1, 2, or 4.

### (3) Supplementary uplink (Supplementary Uplink, SUL) feature

At a near point, the UE can use a normal uplink (Normal Uplink, NUL). At a far point, the UE can use an SUL. A frequency of the SUL is generally lower than a frequency of the NUL, and a coverage area of the SUL is greater than a coverage area of the NUL. After the base station configures the NUL and the SUL for the UE, the UE may use only the NUL, or use only the SUL, or use both the NUL and the SUL during scheduling. The SUL can be used to expand the coverage area and increase an uplink sending rate.

The SUL feature includes but is not limited to:
(a) Whether sending and receiving can be simultaneously performed on the SUL;
(b) Whether dynamic switching of the SUL is supported;
(c) Whether the following case is supported: the SUL is used to transmit a sounding reference signal (Sounding Reference Signal, SRS) and the NUL is used to transmit uplink data, or the SUL is used to transmit uplink data and the NUL is used to transmit an SRS.

From a perspective of the UE, that the UE sends signaling or data to the base station is referred to as uplink sending, and that the UE receives signaling or data from the base station is referred to as downlink receiving. An uplink capability and a downlink capability of the UE may be the same or may be different.

Currently, for UE that supports a plurality of SIM cards, when reporting a capability corresponding to any one of the SIM cards, the UE reports the capability based on a scenario in which other SIM cards of the UE do not operate. In other words, the reported capability corresponding to one SIM card is all capabilities of the UE corresponding to the SIM card. However, in a communication process of the UE, the plurality of SIM cards of the UE may all operate. In other words, one SIM card of the UE can apply only a part of capability information of the UE corresponding to the SIM card. However, the base station schedules the UE based on the capability information reported by the UE. As a result, the UE may be incapable of being scheduled by the base station, and network compatibility problems such as a bit error and repeated activation and deactivation of a secondary carrier component (secondary carrier component, SCC) are caused. Consequently, the UE cannot implement communication of the plurality of SIM cards.

In a scenario in which the plurality of SIM cards all operate, to reduce a probability that a current capability specification of the UE is less than a previously reported capability specification of the UE, the UE may notify the base station of the current capability specification of the UE in a manner such as active reporting or passive reporting. For example, the UE actively reports UE assistance information (UE assistance information, UAI) before a resource configured by the base station for the UE exceeds the current capability specification, or passively reports UAI when a resource configured by the base station for the UE exceeds the current capability specification, to request that the resource configured by the base station for the UE not exceed the current capability specification of the UE.

The active reporting can improve flexibility of configuring a resource for the UE by the base station. However, the current capability specification of the UE is related to current statuses of the two SIM cards. For example, corresponding capability specifications of the UE vary in different cases, for example, a SIM card 1 is in the RRC connected state and a SIM card 2 is in the RRC idle state, the SIM card 1 is in the RRC idle state and the SIM card 2 is in the RRC connected state, and the SIM card and the SIM card 2 are both in the RRC connected state. Therefore, when the statuses of the SIM card and the SIM card 2 are frequently switched, the UE needs to frequently report the UAI, resulting in a large amount of signaling exchange. In addition, a large amount of current capability information of the UE is carried in the UAI reported each time, resulting in large signaling overheads. The passive reporting causes network compatibility problems such as a bit error, repeated activation and deactivation of an SCC, and repeated configuration and deconfiguration that may still exist within a period of time after the UAI is reported. In addition, a resource reconfigured by the base station for the UE may still exceed the current capability specification of the UE.

For a problem of how to further improve overall performance of UE having a plurality of SIM cards in a scenario in which the plurality of SIM cards all operate, embodiments of this application provide a plurality of communication methods. The following further describes embodiments of this application with reference to specific examples. In the following embodiments in FIG. 5 to FIG. 7, a first user corresponds to the SIM card 1, and a second user corresponds to the SIM card 2.

FIG. 5 is a diagram of a UE communication procedure according to an embodiment of this application. The method includes the following steps.

Step 501: UE sends a first message.

In embodiments of this application, the first message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application.

The first message may indicate at least one capability set, and one of the at least one capability set may include a capability corresponding to at least one user of the UE.

For example, the UE may determine different capability sets based on different scenarios. For example, the UE determines a capability set 1 based on a scenario in which the plurality of SIM cards do not all operate, and determines a capability set 2 based on a scenario in which the plurality of SIM cards all operate. The first message may indicate the capability set 1 and the capability set 2.

The capability set 1 includes a first capability corresponding to the first user of the UE. For example, the first capability is a capability corresponding to a first user identity when the UE communicates with a corresponding network device only by using the first user identity. For example, the first capability is a capability of the SIM card 1 (the first user identity) when the SIM card 1 (the first user identity) is in an RRC connected state and the SIM card 2 (a second user identity) is in an RRC idle state. For example, in the capability set 1, a value of CA-BandwidthClassNR is 5, and a value of maxNumberMIMO-LayersPDSCH is 4.

The capability set 2 includes a second capability corresponding to the first user. The second capability is a capability corresponding to the first user identity when the UE simultaneously communicates with a corresponding first network device by using the first user identity and communicates with a corresponding second network device by using the second user identity. For example, the second capability is a capability of the SIM card 1 (the first user identity) when the SIM card 1 (the first user identity) is in the RRC connected state and the SIM card 2 (the second user identity) is in the RRC connected state. For example, in the capability set 2, a value of CA-BandwidthClassNR is 2, and a value of maxNumberMIMO-LayersPDSCH is 2.

In embodiments of this application, the first network device corresponding to the first user identity and the second network device corresponding to the second user identity may be a same network device, or may be different network devices. This is not limited in embodiments of this application.

In specific implementation, the first message may include at least one capability message. Alternatively, the first message may include only one capability message. This is not limited in embodiments of this application.

When the first message includes the at least one capability message, one of the at least one capability message may indicate one of the at least one capability set. For example, the first message includes a capability message 1 and a capability message 2, the capability message 1 indicates the capability set 1, and the capability message 2 indicates the capability set 2. Alternatively, a capability message A in the at least one capability message may indicate a capability set A in the at least one capability set, and a capability message B in the at least one capability message may indicate capability parameters that are of a capability set B in the at least one capability set and that are different from those of the capability set A and different values that are in the capability set B and that are of a capability parameter same as that of the capability set A. The capability message B is a capability message other than the capability message A, and the capability set B is a capability set other than the capability set A. For example, the first message includes a capability message 3 and a capability message 4, the capability message 3 indicates a capability set 3, and the capability message 4 indicates capability parameters that are of a capability set 4 and that are different from those of the capability set 3 and different values that are in the capability set 4 and that are of a capability parameter same as that of the capability set 3. For example, a value of CA-BandwidthClassNR in the capability set 4 is 3, and a value of CA-BandwidthClassNR in the capability set 3 is 5.

When the first message includes one capability message, the capability message may indicate the at least one capability set. For example, the first message includes a message 1, and the message 1 indicates the capability set 1 and the capability set 2.

In a possible implementation method, the first message may indicate the at least one capability set by using indication information including an index (index) of the at least one capability set. For example, the first message includes an index 1, an index 2, an index 3, an index 4, and other indexes.

In another possible implementation method, the first message may alternatively indicate the at least one capability set by using indication information including a capability parameter of the at least one capability set and a value of the capability parameter. For example, the first message includes a capability set 1: CA-BandwidthClassNR (with a value of 5) and maxNumberMIMO-LayersPDSCH (with a value of 4); and a capability set 2: CA-BandwidthClassNR (with a value of 2) and maxNumberMIMO-LayersPDSCH (with a value of 2).

Correspondingly, the base station receives the first message.

In specific implementation, the first message received by the base station may be from the UE, another base station, or a core network device. This is not limited in embodiments of this application. For example, the UE sends the first message to a base station 1, and the base station 1 receives the first message from the UE. When a base station to which a cell on which the UE camps belongs is switched from the base station 1 to a base station 2, the base station 1 sends the first message to the base station 2, and the base station 2 receives the first message from the base station 1. Alternatively, the base station 1 sends the first message to the core network device, the core network device sends the first message to the base station 2, and the base station 2 receives the first message from the core network device.

In a possible implementation method, the base station may pre-store a correspondence between different indexes and different capability sets, so that after the base station receives the first message, if the first message indicates the at least one capability set by using the indication information including the index of the at least one capability set, the base station may determine, based on the pre-stored correspondence, the at least one capability set corresponding to the index of the at least one capability set. For example, the first message includes indication information of indexes such as an index 1, an index 2, an index 3, and an index 4. After receiving the first message, the base station may determine capability sets such as a capability set 1, a capability set 2, a capability set 3, and a capability set 4 that are respectively corresponding to the indexes such as the index 1, the index 2, the index 3, and the index 4.

Step 502: The UE sends a second message.

In embodiments of this application, the second message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application.

The second message may indicate a first value and a first capability set. The first value is a value of a first capability parameter, the first capability parameter is a capability parameter in the first capability set, a value of the first capability parameter in the first capability set is a second value, and the first capability set is one of the at least one capability set. For example, the first message indicates the capability set 1 and the capability set 2, and the value of maxNumberMIMO-LayersPDSCH in the capability set 1 is 4; and the second message indicates that the value of maxNumberMIMO-LayersPDSCH is 2 and the capability set 1.

In a possible implementation method, the second message may indicate the first capability set by using indication information including an index of the first capability set. For example, the second message includes the index 1.

In another possible implementation method, the second message may alternatively indicate the first capability set by using indication information including a capability parameter of the first capability set and a value of the capability parameter. For example, the second message includes the capability set 1: CA-BandwidthClassNR (with a value of 5) and maxNumberMIMO-LayersPDSCH (with a value of 4).

Correspondingly, the base station receives the second message. After receiving the second message, the base station may modify the first capability set based on the first value to obtain a third capability set, and configure a resource for the UE based on the third capability set. For example, the second message indicates that the value of maxNumberMIMO-LayersPDSCH is 2 and the capability set 1. The base station may modify the value of maxNumberMIMO-LayersPDSCH in the capability set 1 from the original 4 to 2, to obtain the capability set 3, and configure a resource for the UE based on the capability set 3.

According to the foregoing solution, the UE may report the at least one capability set when reporting a capability. Subsequently, the UE may indicate, based on a current capability, the base station to modify any one of the at least one capability set, to obtain a new capability set, so that the base station can configure a resource for the UE based on the new capability set. Because the new capability set meets the current capability of the UE, a probability that the resource configured by the base station for the UE exceeds the current capability specification of the UE is reduced, so that the base station can schedule the UE based on the current capability specification of the UE. In this case, the UE is capable of being scheduled by the base station. Therefore, when the plurality of SIM cards all operate, the UE can also perform communication based on the scheduling performed by the base station, which helps improve overall performance of the UE having the plurality of SIM cards. In addition, because the UE does not need to frequently report the current capability specification of the UE, signaling exchange and signaling overheads are reduced.

After step 501 or step 502 is performed, step A may be further performed in this application.

Step A: The UE sends a third message.

In embodiments of this application, the third message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application. The third message may indicate a second capability set, and the second capability set is one of the at least one capability set. For example, the first message indicates the capability set 1 and the capability set 2, and the third message indicates the capability set 2.

In a possible implementation method, the third message may indicate the second capability set by using indication information including an index of the second capability set. For example, the third message includes the index 2.

In another possible implementation method, the third message may alternatively indicate the second capability set by using indication information including a capability parameter of the second capability set and a value of the capability parameter. For example, the third message includes the capability set 2: CA-BandwidthClassNR (with a value of 2) and maxNumberMIMO-LayersPDSCH (with a value of 2).

Correspondingly, the base station receives the third message. After receiving the third message, the base station may configure a resource for the UE based on the second capability set.

Before performing step 502 and step A, in a possible implementation method, the base station may determine that a capability set having a first index in the at least one capability set is a default capability set, and configure a resource for the UE based on the default capability set. In other words, the default capability set may be used by the base station to configure a resource for the UE when the base station receives the first message and does not receive a message (for example, the second message or the third message) that indicates the capability parameter and/or the capability set. For example, the base station presets the capability set 1 corresponding to the index 1 as the default capability set. After receiving the first message, the base station may configure a resource for the UE based on the capability set 1 corresponding to the index 1.

In another possible implementation method, the first message may further indicate a second index, and the base station may configure a resource for the UE based on a capability set having the second index in the at least one capability set. For example, the first message includes the indication information of the index 2. After receiving the first message, the base station may configure a resource for the UE based on the capability set 2 corresponding to the index 2.

According to the foregoing solution, the UE may indicate, based on the current capability, the base station to configure a resource for the UE based on any capability set in the at least one capability set that is previously reported. Because the any capability set meets the current capability of the UE, a probability that the resource configured by the base station for the UE exceeds the current capability specification of the UE is reduced, so that the base station can schedule the UE based on the current capability specification of the UE. In this case, the UE is capable of being scheduled by the base station. Therefore, when the plurality of SIM cards all operate, the UE can also perform communication based on the scheduling performed by the base station, which helps improve the overall performance of the UE having the plurality of SIM cards. In addition, because the UE does not need to frequently report the current capability specification of the UE, the signaling exchange and the signaling overheads are reduced.

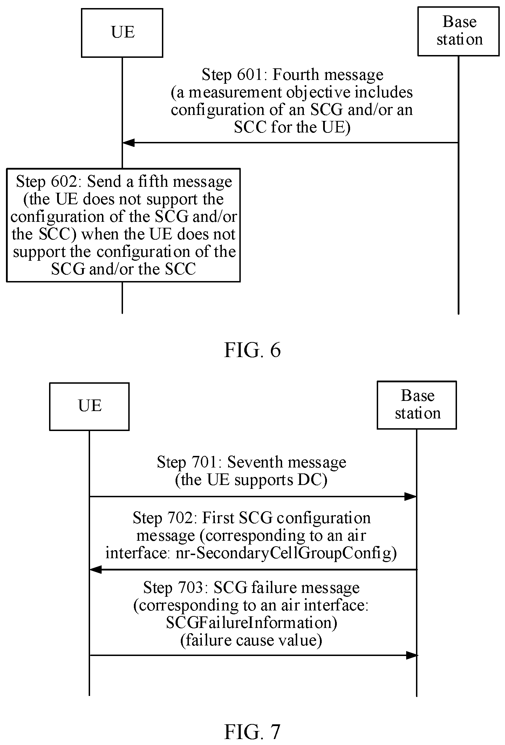

FIG. 6 is a diagram of another UE communication procedure according to an embodiment of this application. The method includes the following steps.

Step 601: UE receives a fourth message.

In embodiments of this application, the fourth message may indicate a measurement objective. The measurement objective includes configuration of a secondary cell group (secondary cell group, SCG) and/or a secondary carrier component (secondary carrier component, SCC) for the UE. In addition, the fourth message may further indicate a measurement object, a measurement reporting configuration, and the like. The measurement object may include a measured carrier frequency, a measured reference signal type, neighboring cell information, and the like. The measurement reporting configuration may include a measurement trigger threshold, a measurement reporting trigger event, and the like.

In embodiments of this application, configuring an SCG may be understood as configuring a PSCell. Configuring an SCC may be understood as configuring an SCell. Configuring an SCG and/or an SCC may be adding an SCG and/or an SCC.

In specific implementation, the measurement objective may be related to a first frequency, where the first frequency is a frequency used to configure the SCG and/or the SCC; or the measurement objective may be related to a first measurement object, where the first measurement object is a measurement object at a first frequency; or the measurement objective may be related to a first reference signal, where the first reference signal is a reference signal transmitted at a first frequency; or the measurement objective may be related to a first measurement reporting configuration, and the first measurement reporting configuration is used to configure measurement reporting of the SCG and/or the SCC. For example, when indicating the measurement objective, the base station may associate a field indicating the measurement objective with a field indicating the first frequency, the first measurement object, the first reference signal, or the first measurement reporting configuration.

Before step 601 is performed, the following step B may be further performed in this application.

Step B: The UE sends a sixth message.

In embodiments of this application, the sixth message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application. The sixth message may indicate that a capability of the UE is in a restricted state, or indicate that the UE does not expect the base station to blindly configure an SCG and/or an SCC, or indicate that the UE does not expect the base station not to use a measurement report to configure an SCG and/or an SCC for the UE.

In specific implementation, the sixth message may indicate, by including one or more of the following information, that the capability of the UE is in the restricted state:
first indication information, indicating to reduce a maximum number of cells supported by the UE for carrier aggregation and/or reduce a maximum number of MIMO layers supported by the UE;
second indication information, indicating restricted capability information of the UE; or
third indication information, indicating that the capability of the UE is in the restricted state. Optionally, the third indication information is one bit (bit).

Correspondingly, the base station receives the sixth message. After receiving the sixth message, the base station determines that the UE does not support the base station in not using the measurement report to configure the SCG and/or the SCC for the UE. Therefore, before configuring the SCG and/or the SCC for the UE, the base station needs to send the fourth message to the UE.

Step 602: The UE sends a fifth message when the UE does not support configuration of the SCG and/or the SCC.

In embodiments of this application, the fifth message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application. The fifth message indicates that the UE does not support the configuration of the SCG and/or the SCC.

That the UE does not support the configuration of the SCG and/or the SCC may be understood as that the UE does not support the configuration of the SCG and/or the SCC at the first frequency. That the UE does not support the configuration of the SCG and/or the SCC at the first frequency may be understood as that the UE does not support configuration of a carrier at the first frequency as a PSCell and/or an SCell.

Alternatively, that the UE does not support the configuration of the SCG and/or the SCC may be understood as that the UE does not support addition of the SCG and/or the SCC.

In a possible implementation method, when the UE does not support the configuration of the SCG and/or the SCC, the UE may perform one or more of the following operations: discarding the fourth message; skipping measuring the first frequency; or skipping sending a measurement report about the first frequency.

In another possible implementation method, the UE may send a measurement report about the first frequency when the UE supports the configuration of the SCG and/or the SCC and a reporting condition is met.

According to the foregoing solution, when reporting a capability, the UE may report that the capability of the UE is in the restricted state, so that the base station needs to configure the SCG and/or the SCC for the UE based on the measurement report. Subsequently, when the UE does not support the configuration of the SCG and/or the SCC, the UE may notify the base station that the UE does not support the configuration of the SCG and/or the SCC, thereby reducing a probability that the SCG and/or the SCC configured by the base station for the UE exceed a current capability specification of the UE. Further, the base station can schedule the UE based on a current actual capability of the UE. In this case, the UE is capable of being scheduled by the base station. Therefore, when the plurality of SIM cards all operate, the UE can also perform communication based on the scheduling performed by the base station, which helps improve overall performance of the UE having the plurality of SIM cards.

FIG. 7 is a diagram of still another UE communication procedure according to an embodiment of this application. The method includes the following steps.

Step 701: UE sends a seventh message.

In embodiments of this application, the seventh message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application. The seventh message may indicate that the UE supports dual connectivity (dual connectivity, DC).

Correspondingly, the base station receives the seventh message, and when determining that the UE supports the DC, configures an SCG for the UE, that is, sends a first SCG configuration message to the UE.

Step 702: The UE receives the first SCG configuration message.

In embodiments of this application, the first SCG configuration message may be an air interface message nr-SecondaryCellGroupConfig. The first SCG configuration message may be used to configure a first SCG for the UE.

Step 703: The UE sends an SCG failure message.

In embodiments of this application, the SCG failure message may be an air interface message SCGFailureInformation. The SCG failure message indicates that the UE fails to configure the first SCG. The SCG failure message may include a failure cause value (for example, dualSIMconflict), and the failure cause value may indicate that a reason why the UE fails to configure the first SCG includes that at least two SIM cards of the UE all operate, for example, the UE concurrently sends data of a first user and data of a second user. For example, the failure cause value dualSIMconflict is added to SCGFailureInformation as follows:

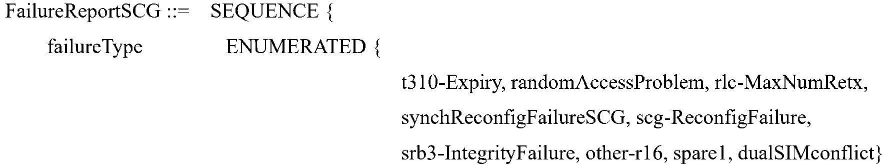

Correspondingly, the base station receives the SCG failure message, and when determining that the reason why the UE fails to configure the SCG includes that the at least two SIM cards of the UE all operate, the base station does not configure the SCG for the UE.

After step 703 is performed, the following step C1 and step C2 may be further performed in this application.

Step C1: The UE sends an eighth message when the at least two SIM cards of the UE all stop operating.

In embodiments of this application, the eighth message may be an air interface message such as UECapabilityInformation, UEAssistanceInformation, RRCSetupRequest, RRCResumeRequest, RRCReestablishmentRequest, RRCSetupComplete, RRCResumeComplete, or RRCReestablishmentComplete. This is not limited in embodiments of this application. The eighth message may indicate that the UE supports the DC.

Correspondingly, the base station receives the eighth message, and when determining that the UE supports the DC, configures an SCG for the UE, that is, sends a second SCG configuration message to the UE.

Step C2: The UE receives the second SCG configuration message.

In embodiments of this application, the second SCG configuration message may be an air interface message nr-SecondaryCellGroupConfig. The second SCG configuration message may be used to configure a second SCG for the UE.

According to the foregoing solution, when reporting a capability, the UE may report that the UE supports the DC, so that the base station configures the SCG for the UE. Subsequently, the UE may add a cause value to the SCG failure message, to notify the base station that a SCG failure cause includes that the at least two SIM cards of the UE all operate, so that the base station no longer configures the SCG for the UE, thereby reducing a probability that the SCG configured by the base station for the UE exceeds a current capability specification of the UE. Further, the base station can schedule the UE based on a current actual capability of the UE. In this case, the UE is capable of being scheduled by the base station. Therefore, when the plurality of SIM cards all operate, the UE can also perform communication based on the scheduling performed by the base station, which helps improve overall performance of the UE having the plurality of SIM cards.

It may be understood that, to implement the functions in the foregoing embodiments, the terminal device and the network device include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on specific application scenarios and design constraint conditions of the technical solutions.

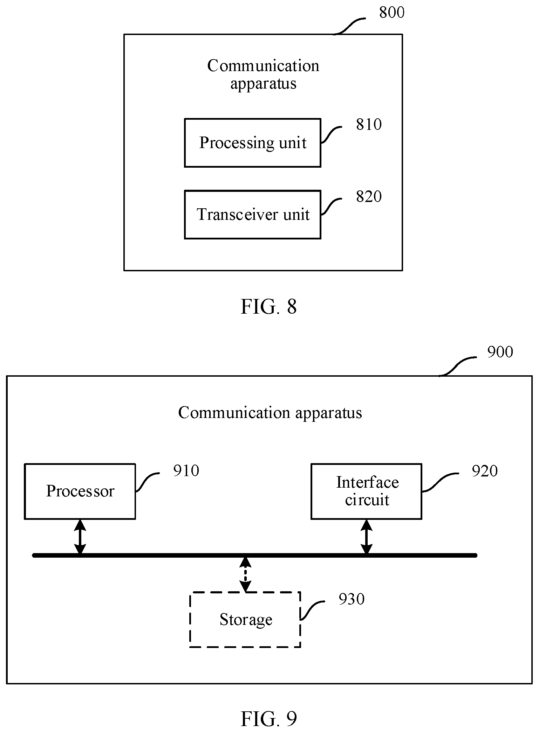

FIG. 8 and FIG. 9 are diagrams of structures of possible communication apparatuses according to an embodiment of this application. The communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device, or may be a network device, or may be a module (for example, a chip) used in a terminal device or a network device.

As shown in FIG. 8, a communication apparatus 800 includes a processing unit 810 and a transceiver unit 820. The communication apparatus 800 is configured to implement a function of the terminal device or the network device in the method embodiments shown in FIG. 5 to FIG. 7.

In a 1^{st} embodiment, when the communication apparatus 800 is configured to implement the function of the terminal device in the method embodiment shown in FIG. 5, the transceiver unit 820 is configured to send a first message, where the first message indicates at least one capability set, and one of the at least one capability set includes a capability corresponding to at least one user of the terminal device. The transceiver unit 820 is further configured to send a second message, where the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

In a possible implementation method, the transceiver unit 820 is further configured to send a third message, where the third message indicates a second capability set, and the second capability set is one of the at least one capability set.

In a possible implementation method, a capability set having a first index in the at least one capability set is a default capability set, and the default capability set is used by a network device to configure a resource for the terminal device when the network device does not receive a message that indicates a capability parameter and/or a capability set.

In a possible implementation method, the first message further indicates a second index, and a capability set having the second index in the at least one capability set is used by a network device to configure a resource for the terminal device.

In a 1^{st} embodiment, when the communication apparatus 800 is configured to implement the function of the network device in the method embodiment shown in FIG. 5, the transceiver unit 820 is configured to receive a first message, where the first message indicates at least one capability set, and one of the at least one capability set includes a capability corresponding to at least one user of a terminal device. The transceiver unit 820 is further configured to receive a second message, where the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

In a possible implementation method, the processing unit 810 is configured to modify the first capability parameter in the first capability set based on the first value, to obtain a third capability set.

In a possible implementation method, the processing unit 810 is further configured to configure a resource for the terminal device based on the third capability set.

In a possible implementation method, the transceiver unit 820 is further configured to receive a third message, where the third message indicates a second capability set, and the second capability set is one of the at least one capability set; and the processing unit 810 is further configured to configure a resource for the terminal device based on the second capability set.

In a possible implementation method, the processing unit 810 is further configured to: when a message that indicates a capability parameter and/or a capability set is not received, determine that a capability set having a first index in the at least one capability set is a default capability set, and configure a resource for the terminal device based on the default capability set.

In a possible implementation method, the processing unit 810 is further configured to: when the first message further indicates a second index, and the second message and the third message are not received, configure a resource for the terminal device based on a capability set having the second index in the at least one capability set.

In a 2^{nd} embodiment, when the communication apparatus 800 is configured to implement the function of the terminal device in the method embodiment shown in FIG. 6, the transceiver unit 820 is configured to receive a fourth message, where the fourth message indicates a measurement objective, and the measurement objective includes configuration of a secondary cell group SCG and/or a secondary carrier component SCC for the terminal device. The transceiver unit 820 is further configured to: send a fifth message when the terminal device does not support the configuration of the SCG and/or the SCC, where the fifth message indicates that the terminal device does not support the configuration of the SCG and/or the SCC.

In a possible implementation method, the measurement objective is related to a first frequency, and the first frequency is a frequency used to configure the SCG and/or the SCC; or the measurement objective is related to a first measurement object, the first measurement object is a measurement object at a first frequency, and the first frequency is a frequency used to configure the SCG and/or the SCC; or the measurement objective is related to a first reference signal, the first reference signal is a reference signal transmitted at a first frequency, and the first frequency is a frequency used to configure the SCG and/or the SCC; or the measurement objective is related to a first measurement reporting configuration, and the first measurement reporting configuration is used to configure measurement reporting of the SCG and/or the SCC.

In a possible implementation method, that the terminal device does not support the configuration of the SCG and/or the SCC includes: The terminal device does not support the configuration of the SCG and/or the SCC at the first frequency.

In a possible implementation method, the processing unit 810 is configured to: when the terminal device does not support the configuration of the SCG and/or the SCC, perform one or more of the following operations: discarding the fourth message; skipping measuring the first frequency, where the first frequency is a frequency used to configure the SCG and/or the SCC; or skipping sending a measurement report about the first frequency, where the first frequency is a frequency used to configure the SCG and/or the SCC.

In a possible implementation method, before receiving the fourth message, the transceiver unit 820 is further configured to send a sixth message, where the sixth message indicates that a capability of the terminal device is in a restricted state.

In a possible implementation method, the sixth message indicates, by including one or more of the following information, that the capability of the terminal device is in the restricted state: first indication information, indicating to reduce a maximum number of cells supported by the terminal device for carrier aggregation and/or reduce a maximum number of multiple-input multiple-output MIMO layers supported by the terminal device; second indication information, indicating restricted capability information of the terminal device; or third indication information, indicating that the capability of the terminal device is in the restricted state.

In a possible implementation method, the sixth message is any one of a UAI, an RRC setup request, an RRC resume request, or an RRC reestablishment request.

In a 2nd embodiment, when the communication apparatus 800 is configured to implement the function of the network device in the method embodiment shown in FIG. 6, the transceiver unit 820 is configured to send a fourth message, where the fourth message indicates a measurement objective, and the measurement objective includes configuration of an SCG and/or an SCC for a terminal device; and the transceiver unit 820 is further configured to receive a fifth message, where the fifth message indicates that the terminal device does not support the configuration of the SCG and/or the SCC.

In a possible implementation method, the measurement objective is related to a first frequency, and the first frequency is a frequency used to configure the SCG and/or the SCC; or the measurement objective is related to a first measurement object, the first measurement object is a measurement object at a first frequency, and the first frequency is a frequency used to configure the SCG and/or the SCC; or the measurement objective is related to a first reference signal, the first reference signal is a reference signal transmitted at a first frequency, and the first frequency is a frequency used to configure the SCG and/or the SCC; or the measurement objective is related to a first measurement reporting configuration, and the first measurement reporting configuration is used to configure measurement reporting of the SCG and/or the SCC.

In a possible implementation method, that the terminal device does not support the configuration of the SCG and/or the SCC includes: The terminal device does not support the configuration of the SCG and/or the SCC at the first frequency.

In a possible implementation method, before sending the fourth message, the transceiver unit 820 is further configured to receive a sixth message, where the sixth message indicates that a capability of the terminal device is in a restricted state.

In a possible implementation method, the sixth message indicates, by including one or more of the following information, that the capability of the terminal device is in the restricted state: first indication information, indicating to reduce a maximum number of cells supported by the terminal device for carrier aggregation and/or reduce a maximum number of multiple-input multiple-output MIMO layers supported by the terminal device; second indication information, indicating restricted capability information of the terminal device; or third indication information, indicating that the capability of the terminal device is in the restricted state.

In a 3^{rd} embodiment, when the communication apparatus 800 is configured to implement the function of the terminal device in the method embodiment shown in FIG. 7, the transceiver unit 820 is configured to send a seventh message, where the seventh message indicates that the terminal device supports dual connectivity DC; the transceiver unit 820 is further configured to receive a first SCG configuration message, where the first SCG configuration message is used to configure a first SCG for the terminal device; and the transceiver unit 820 is further configured to send an SCG failure message, where the SCG failure message indicates that the terminal device fails to configure the first SCG, the SCG failure message includes a failure cause value, and the failure cause value indicates that a reason why the terminal device fails to configure the first SCG includes that at least two subscriber identity module SIM cards of the terminal device all operate.

In a possible implementation method, the transceiver unit 820 is further configured to send an eighth message when the at least two SIM cards of the terminal device all stop operating, where the eighth message indicates that the terminal device supports the DC; and the transceiver unit 820 is further configured to receive a second SCG configuration message, where the second SCG configuration message is used to configure a second SCG for the terminal device.

In a 3^{rd} embodiment, when the communication apparatus 800 is configured to implement the function of the network device in the method embodiment shown in FIG. 7, the transceiver unit 820 is further configured to receive a seventh message, where the seventh message indicates that the terminal device supports dual connectivity DC; the transceiver unit 820 is further configured to send a first SCG configuration message, where the first SCG configuration message is used to configure a first SCG for the terminal device; and the transceiver unit 820 is further configured to receive an SCG failure message, where the SCG failure message indicates that the terminal device fails to configure the first SCG, the SCG failure message includes a failure cause value, and the failure cause value indicates that a reason why the terminal device fails to configure the first SCG includes that at least two SIM cards of the terminal device all operate.

In a possible implementation method, the transceiver unit 820 is further configured to receive an eighth message, where the eighth message indicates that the terminal device supports the DC; and the transceiver unit 820 is further configured to send a second SCG configuration message, where the second SCG configuration message is used to configure a second SCG for the terminal device.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a storage 930, configured to store instructions executed by the processor 910, or store input data required by the processor 910 to run instructions, or store data generated by the processor 910 by running instructions.

When the communication apparatus 900 is configured to implement the methods shown in FIG. 5 to FIG. 7, the processor 910 is configured to implement a function of the processing unit 810, and the interface circuit 920 is configured to implement a function of the transceiver unit 820.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements the function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or may be any regular processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, an optical storage, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable storage that can guide a computer or another programmable data processing device to operate in a specific manner, so that the instructions stored in the computer-readable storage generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims of this application and equivalent technologies thereof.

## Claims

1. A communication method, applied to a terminal device, wherein the method comprises:
sending a first message, wherein the first message indicates at least one capability set, and one of the at least one capability set comprises a capability corresponding to at least one user of the terminal device; and
sending a second message, wherein the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

2. The method according to claim 1, wherein the method further comprises:
sending a third message, wherein the third message indicates a second capability set, and the second capability set is one of the at least one capability set.

3. The method according to claim 1 or 2, wherein a capability set having a first index in the at least one capability set is a default capability set, and the default capability set is used by a network device to configure a resource for the terminal device when the network device does not receive a message that indicates a capability parameter and/or a capability set.

4. The method according to claim 1 or 2, wherein the first message further indicates a second index, and a capability set having the second index in the at least one capability set is used by a network device to configure a resource for the terminal device.

5. A communication method, applied to a network device, wherein the method comprises:
receiving a first message, wherein the first message indicates at least one capability set, and one of the at least one capability set comprises a capability corresponding to at least one user of a terminal device; and
receiving a second message, wherein the second message indicates a first value and a first capability set, the first value is a value of a first capability parameter, the first capability parameter is a capability parameter in the first capability set, a value of the first capability parameter in the first capability set is a second value, and the first capability set is one of the at least one capability set.

6. The method according to claim 5, wherein the method further comprises:
modifying the first capability parameter in the first capability set based on the first value, to obtain a third capability set.

7. The method according to claim 6, wherein the method further comprises:
configuring a resource for the terminal device based on the third capability set.

8. The method according to any one of claims 5 to 7, wherein the method further comprises:
receiving a third message, wherein the third message indicates a second capability set, and the second capability set is one of the at least one capability set; and
configuring a resource for the terminal device based on the second capability set.

9. The method according to any one of claims 5 to 8, wherein after receiving the first message, the method further comprises:
when a message that indicates a capability parameter and/or a capability set is not received, determining that a capability set having a first index in the at least one capability set is a default capability set, and configuring a resource for the terminal device based on the default capability set.

10. The method according to any one of claims 5 to 8, wherein after receiving the first message, the method further comprises:
when the first message further indicates a second index, configuring a resource for the terminal device based on a capability set having the second index in the at least one capability set.

11. A communication method, applied to a terminal device, wherein the method comprises:
receiving a fourth message, wherein the fourth message indicates a measurement objective, and the measurement objective comprises configuration of a secondary cell group SCG and/or a secondary carrier component SCC for the terminal device; and
send a fifth message when the terminal device does not support the configuration of the SCG and/or the SCC, wherein the fifth message indicates that the terminal device does not support the configuration of the SCG and/or the SCC.

12. The method according to claim 11, wherein the method further comprises:
the measurement objective is related to a first frequency, and the first frequency is a frequency used to configure the SCG and/or the SCC; or
the measurement objective is related to a first measurement object, the first measurement object is a measurement object at a first frequency, and the first frequency is a frequency used to configure the SCG and/or the SCC; or
the measurement objective is related to a first reference signal, the first reference signal is a reference signal transmitted at a first frequency, and the first frequency is a frequency used to configure the SCG and/or the SCC; or
the measurement objective is related to a first measurement reporting configuration, and the first measurement reporting configuration is used to configure measurement reporting of the SCG and/or the SCC.

13. The method according to claim 11 or 12, wherein that the terminal device does not support the configuration of the SCG and/or the SCC comprises:
the terminal device does not support the configuration of the SCG and/or the SCC at the first frequency.

14. The method according to any one of claims 11 to 13, wherein the method further comprises:
when the terminal device does not support the configuration of the SCG and/or the SCC, performing one or more of the following operations:
discarding the fourth message;
skipping measuring the first frequency, wherein the first frequency is a frequency used to configure the SCG and/or the SCC; or
skipping sending a measurement report about the first frequency, wherein the first frequency is a frequency used to configure the SCG and/or the SCC.

15. The method according to any one of claims 11 to 14, wherein before receiving the fourth message, the method further comprises:
sending a sixth message, wherein the sixth message indicates that a capability of the terminal device is in a restricted state.

16. The method according to claim 15, wherein the sixth message indicates, by comprising one or more of the following information, that the capability of the terminal device is in the restricted state:
first indication information, indicating to reduce a maximum number of cells supported by the terminal device for carrier aggregation and/or reduce a maximum number of multiple-input multiple-output MIMO layers supported by the terminal device;
second indication information, indicating restricted capability information of the terminal device; or
third indication information, indicating that the capability of the terminal device is in the restricted state.

17. A communication method, applied to a network device, wherein the method comprises:
sending a fourth message, wherein the fourth message indicates a measurement objective, and the measurement objective comprises configuration of an SCG and/or an SCC for a terminal device; and
receiving a fifth message, wherein the fifth message indicates that the terminal device does not support the configuration of the SCG and/or the SCC.

18. The method according to claim 17, wherein the method further comprises:
the measurement objective is related to a first frequency, and the first frequency is a frequency used to configure the SCG and/or the SCC; or
the measurement objective is related to a first measurement object, the first measurement object is a measurement object at a first frequency, and the first frequency is a frequency used to configure the SCG and/or the SCC; or
the measurement objective is related to a first reference signal, the first reference signal is a reference signal transmitted at a first frequency, and the first frequency is a frequency used to configure the SCG and/or the SCC; or
the measurement objective is related to a first measurement reporting configuration, wherein the first measurement reporting configuration is used to configure measurement reporting of the SCG and/or the SCC.

19. The method according to claim 17 or 18, wherein that the terminal device does not support the configuration of the SCG and/or the SCC comprises:
the terminal device does not support the configuration of the SCG and/or the SCC at the first frequency.

20. The method according to any one of claims 17 to 19, wherein before sending the fourth message, the method further comprises:
receiving a sixth message, wherein the sixth message indicates that a capability of the terminal device is in a restricted state.

21. The method according to claim 20, wherein the sixth message indicates, by comprising one or more of the following information, that the capability of the terminal device is in the restricted state:
first indication information, indicating to reduce a maximum number of cells supported by the terminal device for carrier aggregation and/or reduce a maximum number of multiple-input multiple-output MIMO layers supported by the terminal device;
second indication information, indicating restricted capability information of the terminal device; or
third indication information, indicating that the capability of the terminal device is in the restricted state.

22. A communication apparatus, comprising a module configured to perform the method according to any one of claims 1 to 4, a module configured to perform the method according to any one of claims 5 to 10, a module configured to perform the method according to any one of claims 11 to 16, or a module configured to perform the method according to any one of claims 17 to 21.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, through a logic circuit or by executing code instructions, the method according to any one of claims 1 to 4, the method according to any one of claims 5 to 10, the method according to any one of claims 11 to 16, or the method according to any one of claims 17 to 21.

24. A communication apparatus, comprising:
a storage, configured to store a computer program; and
a processor, configured to invoke the computer program from the storage and run the computer program, to implement the method according to any one of claims 1 to 4, or implement the method according to any one of claims 5 to 10, or implement the method according to any one of claims 11 to 16, or implement the method according to any one of claims 17 to 21.

25. A chip system, comprising:
a storage, configured to store a computer program; and
a processor, configured to invoke the computer program from the storage and run the computer program, to enable a device on which the chip system is installed to perform the method according to any one of claims 1 to 4, or perform the method according to any one of claims 5 to 10, or perform the method according to any one of claims 11 to 16, or perform the method according to any one of claims 17 to 21.

26. A computer program product, comprising a computer program, wherein when the computer program is executed by a communication apparatus, the method according to any one of claims 1 to 21 is implemented.

27. A computer-readable storage medium, wherein the storage medium stores a computer program or instructions, and when the computer program or the instructions are executed by a communication apparatus, the method according to any one of claims 1 to 21 is implemented.
